# EUROPÄISCHE PATENTANMELDUNG

(11) **EP 0 566 134 A1**
(43) Veröffentlichungstag der Anmeldung: **20.10.1993**
(21) Anmeldenummer: 93106177.4
(22) Anmeldetag: 15.04.1993
(51) Int. Cl.: E04F 19/02, E04F 19/04, F16B 19/00, E06B 3/10, F16B 12/24

(54) **Befestigungselement zur verdeckten Halterung einer Leiste**

(30) Priorität: 16.04.1992 DE 9205273 U
(71) Anmelder: Ostermann & Scheiwe GmbH & Co, D-48155 Münster (DE)
(72) Erfinder: Scheiwe, Peter, D-4400 Münster (DE)
(74) Vertreter: Schulze Horn, Stefan, Dipl.-Ing. M.Sc.

(57) **Zusammenfassung**

Die Erfindung betrifft ein Befestigungselement zur verdeckten Halterung wenigstens einer auf ihrer Rückseite mit wenigstens einer Nut (NO, ..., N5) versehenen Leiste (L1, ... L5), bestehend aus
- einer Basis (B) und
- wenigstens einem mit der Nut (NO, ..., N5) in Eingriff bringbaren Halteabschnitt (1).

Das neue Befestigungselement ist dadurch gekennzeichnet, daß der an der Basis (B) angeordnete Halteabschnitt (1) aus einem länglichen, in Ansicht oder im Längsschnitt gesehen im wesentlichen rechteck- oder parallelogramm- oder trapezförmigen Körper (2) besteht, an dessen gegenüberliegenden Seitenflächen (2.1, ... 2.6) wenigstens ein in Halteabschnittslängsrichtung laufendes, im wesentlichen prismatisches Halterungselement (3.1, ... 3.n ; 4.1, ... 4.n) angeformt ist, dessen spitz zulaufende Prismenseitenflächen (S1 ; S2) in einem Winkel von 50 bis 70° bzw, 10 bis 35° zu den Seitenflächen (2.1, ... 2.6) geneigt sind.

## Beschreibung

Die Erfindung betrifft ein Befestigungselement zur verdeckten Halterung wenigstens einer auf ihrer Rückseite mit wenigstens einer Nut versehenen Leiste, bestehend aus einer Basis und wenigstens einem mit der Nut in Eingriff bringbaren Halteabschnitt.

Ein Befestigungselement der eingangs genannten Art ist aus der DE 40 13 459 AI bekannt. Bei diesem aus Blech gefertigten Befestigungselement greifen Haltelaschen in die auf der Rückseite einer Leiste befindlichen Nuten ein. Die Haltelaschen stehen rechtwinklig von der Halteplatte nach oben und sind nach außen U-förmig umgebogen. Die Endkanten der Endbereiche der Haltelaschen weisen nach außen abgewinkelte, dreieckige Krallen auf, während die Innenseiten der Haltelaschen mit teilweise ausgestanzten und herausgebogenen, dreieckförmigen Krallen versehen sind. Zwischen zwei Haltelaschen an einer Längskante der Halteplatte sind jeweils diese Haltelaschen verbindende und versteifende Verbindungsbleche vorgesehen. An den Stoßstellen zwischen zwei Leisten werden spezielle Winkelelemente eingesetzt, die aus einem im rechten Winkel gebogenen U-Profil bestehen.

Nachteilig ist, daß die nach außen U-förmig ausgebogenen Haltelaschen beim Aufdrücken der Leisten seitwärts und der obere U-förmige Halterungsteil zusammengebogen werden können. Die kurzen seitwärts herausragenden Krallen sind dabei nicht in der Lage, die fehlende Federwirkung der Haltelaschen zu kompensieren, so daß die Leiste nicht voll gehalten werden kann. Ist eine der Haltelaschen seitwärts gebogen, behindert diese bei einer Doppelnut das Befestigen der Leiste und verkantet die Leiste bei einer Einfachnut. Nachteilig ist darüberhinaus, daß für die Eckverbindung von Leisten ein zweites Befestigungselement benötigt wird. Dieses Winkelelement muß bei einer Montage zuerst an einer Leiste in eine Nut geklemmt und danach die zweite Leiste auf das rechtwinklig abgebogene Teil gedrückt werden. Dabei ist es möglich, daß sich das Winkelelement von der ersten Leiste lösen kann. Neben dem doppelten Material- und Fertigungsaufwand für das zweite Spezialteil entsteht dadurch auch noch ein erhöhter Montageaufwand.

Bekannt ist es weiterhin, Leisten mit einer auf der Rückseite eingebrachten Nut mit einem Befestigungselement zu halten. Das Befestigungselement selbst ist zweiteilig ausgebildet. Das eine Teil des Befestigungselementes ist ein Halteabschnitt, der aus einer Winkelstrebe, an deren Seitenwänden Klemmvorsprünge vorgesehen sind, besteht. Im Boden der Winkelstrebe ist eine Öffnung mit radialen Schlitzen angeordnet. Der zweite Teil des Befestigungselementes stellt eine mit einer Wand oder einem Gegenstand verbindbare Basis in Form eines Befestigungsteils dar, das ein Verbindungselement in Form eines Rastkopfes enthält. Bei der Befestigung einer Leiste wird der erste Teil in die Nut und mit der Öffnung auf den Rastkopf des zweiten Teils gedrückt.

Nachteilig ist, daß im Laufe der Zeit die Elastizität des Materials nachlassen kann. Das führt zum einen dazu, daß auch der Kralleffekt der Seitenwände abnimmt und zum anderen, daß es in der Bodenöffnung zu Absplitterungen kommen kann, wodurch ein vorzeitiges Abfallen der Leiste möglich ist. Weiterhin besteht die Gefahr, daß der Halteabschnitt durch die Rastkopfverbindung verdrehen kann, was zur Folge hat, daß die Leiste nicht mehr sicher fixierbar ist.

Aus der DE 89 05 209 U1 ist bekannt, bei einem Wand-Decken-Paneel die Leisten, die die Parallelbretter halten, untereinander durch eine Nut-Feder-Verbindung zusammenzuhalten. Dabei ist in einer Leiste eine Nut und in einer anderen Leiste eine vorspringede Feder angeordnet. Obwohl sich diese Befestigungsart bewährt hat, erfordert das Anbringen der durchgehenden Feder eine Spezialmaschine, die in der Lage ist, paß- und lagegenau die Feder herzustellen. Beim Befestigen beider Leisten aneinander besteht außerdem die Gefahr, daß beim Austrocknen der Leisten die Verbindung nachläßt und beide Leisten sich voneinander lösen können oder daß bei zu strammer Passung die Nut auseinandergedrückt wird.

Der Erfindung liegt die Aufgabe zugrunde, die vorstehend genannten Nachteile bei einem Befestigungselement zur verdeckten Halterung von Leisten der eingangs genannten Art zu beseitigen und ein Befestigungselement zu schaffen, das einfach und sicher in der Wirkungsweise ist und ein genaues und schnelles Befestigen der Leisten ermöglicht.

Erfindungsgemäß wird die Aufgabe dadurch gelöst, daß der an der Basis angeordnete Halteabschnitt aus einem länglichen, in Ansicht oder im Längsschnitt gesehen im wesentlichen rechteck- oder parallelogramm-oder trapezförmigen Körper besteht, an dessen gegenüberliegenden Seitenflächen wenigstens ein in Halteabschnittslängsrichtung laufendes, im wesentlichen prismatisches Halterungselement angeformt ist, dessen spitz zulaufende Prismenseitenflächen in einem Winkel von 50 bis 70° bzw. 10 bis 35° zu den Seitenflächen geneigt sind.

Die mit der Erfindung erzielten Vorteile bestehen insbesondere darin, daß der formstabile steife Körper ein Aufstecken der Leiste in einem durch das Befestigungselement vorgegebenen Verlegungswinkel sichert. Liegt das Befestigungselement am Ende einer Leiste, kann so schnell und sicher eine zweite Leiste in der vorgegebenen Flucht weiterverlegt werden. Die prismatischen Halterungselemente sorgen dafür, daß die Leiste mit der Nut nur auf das Befestigungselement gedrückt zu werden braucht, um danach sicher und dauerhaft festgehalten zu werden. Zugleich bleibt ein bedarfsweises Abnehmen der Leiste zerstörungsfrei und einfach möglich.

In weiterer Ausgestaltung der Erfindung ist die erste Prismenseitenfläche in einem Winkel von 60° und die zweite Prismenseitenfläche in einem Winkel von 25° zu einer der Seitenflächen abgewinkelt angeordnet. Durch die dadurch erzielte Neigung können sich die prismatischen Halterungsabschnitte besonders dem Aufdrücken und Halten der Leiste anpassen.

Vorteilhaft ist, daß die prismatischen Halterungselemente mit ihren prismenseitenflächen nebeneinander auf den gegenüberliegenden Seitenflächen des länglichen Körpers schräg abgewinkelt angeordnet sind. Beim Aufdrücken der Leiste werden so durch die Seitenwände der Nut die spitzen und dreieckigen Körper gestaucht und verformt. Die prismatischen Halterungselemente pressen sich so fest an die Seitenwände an. Soll die Leiste abgezogen werden, ist diese durch die Verformung und Stauchung bestehende Haltekraft erst zu überwinden.

Vorteilhaft ist es, ein so ausgebildetes Halterungselement rechtwinklig an einer als Bodenplatte ausgebildete Basis anzuordnen. Mit der Bodenplatte kann der Körper mit seinen prismatischen Halterungselementen an einer Wand festgelegt, z. B. genagelt oder geschraubt werden.

Der flach auf der Wand angeordnete durchgehende steife Körper nimmt alle auftretenden Kräfte gleichmäßig auf und verhindert ein Abknicken bzw. Abwinkeln des Befestigungsabschnittes.

Besonders vorteilhaft ist es, daß in den länglichen Körper mit den prismatischen Halterungselementen und in die Bodenplatte vorzugsweise in der Mitte eine im Querschnitt dreieckförmige, quer zur Längsrichtung des Befestigungselementes laufende Ausnehmung eingebracht ist. Das Befestigungselement kann so für das Verlegen von Leisten sowohl auf geraden als auch auf in einem beliebigen Winkel zueinander abgebogenen Wandflächen benutzt werden, wobei es für die letztgenannte Verwendung entlang der Spitze der dreieckförmigen Ausnehmung, die eine Materialverdünnung darstellt, in den passenden Winkel gebogen wird. Dadurch werden keine besonderen Eckverlegungselemente mehr benötigt. Auch ein Nachbiegen des Eckverbindungselementes z. B. bei nicht genau rechtwinklig zueinander stehenden Wänden ist nicht mehr nötig. Vielmehr wird die Montage mit diesem Universal-Befestigungselement mit der dreieckigen Ausnehmung mit einem Öffnungswinkel von 30 bis 120°, vorzugsweise 90°, bei einer Wandverlegung der Leisten wesentlich erleichtert.

Vorteilhaft ist es, an der Bodenplatte parallel zum ersten länglichen Körper mit prismatischen Halterungselementen einen zweiten länglichen Körper mit prismatischen Halterungselementen anzuordnen. Dieses Doppelsteg-Befestigungselement ist für die Verlegung von Leisten mit zwei nebeneinanderliegenden Nuten geeignet. Dadurch wird zum einen die Leiste noch sicherer gehalten und zum anderen sehr genau in der vorgesehenen Flucht geführt. Ein Abknicken der Befestigungselemente ist beim Aufdrücken der Leiste auch hier praktisch ausgeschlossen, so daß die Montage in keinster Weise behindert wird.

In besonderer Ausgestaltung der Erfindung geht der längliche Körper mit den prismatischen Halterungselementen in eine als Steg ausgebildete Basis über, an der entgegengesetzt zu dem ersten ein dritter länglicher Körper mit prismatischen Halterungselementen angeordnet ist. Dadurch ist es möglich, bisher übliche Nut-Feder-Verbindungen auf Nut-Nut-Verbindungen mit verdeckter Befestigung umzustellen. Jetzt kann Leiste gegen Leiste gedrückt werden und durch dazwischenliegende Befestigungselemente zusammengehalten werden. Beim Fertigen der Leiste muß darüber hinaus nicht mehr festgelegt werden, welche Leiste mit welcher Leiste zusammenzudrücken ist, um danach zu entscheiden, welche eine Nut und welche eine Feder erhalten muß. Vielmehr kann jetzt jede mit jeder Leiste zusammengefügt werden, was neben der Herstellung auch die Montage wesentlich vereinfacht.

Vorteilhaft ist es, den zweiten sowie den dritten länglichen Körper mit seinen prismatischen Halterungselementen jeweils spiegelbildlich zum ersten länglichen Körper mit seinen prismatischen Halterungselementen anzuordnen. Dadurch ist gesichert, daß für jede der hergestellten Nuten gleiche Eindrück- und Haltekräfte zur Verfügung gestellt werden.

Vorteilhaft ist es weiterhin, daß die Bodenplatte mit den rechtwinklig und spiegelbildlich zueinander angeordneten ersten und zweiten Körpern mit ihren prismatischen Halterungselementen und der erste und der dritte Körper mit ihren prismatischen Halterungselementen mit dem dazwischenliegenden Steg einstückig hergestellt sind. Dadurch entsteht jeweils ein Befestigungselement, das durch die gleichzeitige Formgebung seiner Einzelteile in sich fest und arm an innerer Spannung ist und damit sämtlichen in der Praxis zu erwartenden äußeren statischen und dynamischen Belastungen standhalten kann.

Diese Eigenschaften werden besonders vorteilhaft dann gewährleistet, wenn die Körper mit ihren prismatischen Halterungselementen, der Steg und die Bodenplatte aus Kunststoff hergestellt sind.

Der längliche Körper kann bei seiner speziellen Ausführung im Querschnitt gesehen quader-, prismen-oder vieleckförmig ausgebildet sein. Ein quaderartiger Körper hat den Vorteil, daß die Eindrück- und Haltekräfte in der Nut selbst weitestgehend gleich sind. Beim einem prismenförmigen Körper können vor allem durch seine keilartige Wirkung die Eindrückkräfte verringert und die Haltekräfte zugleich erhöht werden. Ist der Körper vieleckförmig, verlagert sich die größte Halterungskraft etwa in die Mitte der Seitenflächen. Das ist insbesondere dann von Vorteil, wenn die Nut entsprechend ausgebildet ist und die Nutseitenwände federnde Eigenschaften aufweisen.

Der Steg ist vorteilhaft als länglicher quader-, oval- oder vieleckförmiger Körper auszubilden. Der Steg kann so unmittelbar aus dem einen in den anderen Körper geführt werden. Das hat bei einem quaderförmigen Steg und quaderförmigen Körper den Vorteil, daß diese drei Elemente quasi eine stabile Einheit bilden, an die oben und unten die z. B. prismatischen Halterungselemente angeformt sind. Dieses steife Zwischenstück ist in der Lage, nicht nur Zug-, sondern auch Scherkräfte unterschiedlichster Art aufzunehmen. Ein vieleckförmiger Steg hat ähnliche statische und dynamische Eigenschaften. Er ist aber darüber hinaus in der Lage, durch ein breiteres Zwischenstück einen gleichmäBigen Abstand zu halten. Das gleiche gilt auch für ein ovales Zwischenteil; hier können bei der Montage sich ergebende Teildifferenzen in einem gewählten Abstand zu Lasten des Ovals ausgeglichen werden.

Vorteilhaft ist es auch, die Bodenplatte und die daran rechtwinklig angeordneten quaderförmigen Körper mit gleichem Querschnitt auszubilden. Gleiches gilt auch für den Steg und die sich daran gegenüberliegenden Körper. In beiden Fällen bilden Halte- und Befestigungs- bzw. Halte- und Zwischenelemente eine Einheit in optischer und halterungstechnischer Hinsicht.

Zur Erleichterung und Beschleunigung der Montage des Befestigungselementes wird vorgeschlagen, daß in dessen Basis wenigstens eine Durchbrechung oder Bohrung zur Hindurchführung von Befestigungsmitteln, wie Schrauben oder Nägel oder dergleichen, vorgesehen ist. Bevorzugt sind ein oder zwei größere Durchbrechungen oder Bohrungen für die Durchführung je einer Schraube und beabstandet von diesen jeweils mehrere kleinere Durchbrechungen oder Bohrungen für das Hindurchführen von Nägeln vorgesehen, wobei je nach Untergrund, auf dem das Befestigungselement anzubringen ist, das eine oder andere Befestigungsmittel zweckentsprechend ausgewählt wird. Alternativ ist auch eine Verklebung des Befestigungselementes mit dem Untergrund, auf dem es anzubringen ist, denkbar, insbesondere mittels Heißkleber.

Zur Erleichterung und Beschleunigung und zur Gewährleistung einer hohen Genauigkeit der Montage des Befestigungselementes wird weiterhin erfindungsgemäß eine Bohrschablone vorgeschlagen. Diese erfindungsgemäAe Bohrschablone ist gekennzeichnet durch eine flache Rückenplatte mit mindestens einer Bohrung in einer der Durchbrechung oder Bohrung im Befestigungselement entsprechenden Lage und in einer zur Hindurchführung eines Bohrers geeigneten Größe, durch eine flache Fußplatte, die unter einem Winkel β zwischen 90 und 95° von der Rückenplatte abgewinkelt ist, und durch einen an der Rückenplatte oder Bodenplatte angebrachten Haltegriff. Die Bohrschablone ist aufgrund des Haltegriffes einfach mit einer Hand positionierbar und festlegbar, so daß mit der anderen Hand eine passende Bohrung für das Befestigungsmittel, mit dem anschließend das Befestigungselement an den Untergrund befestigt wird, z. B. mittels einer elektrischen Handbohrmaschine herstellbar ist. Die Rückenplatte und die Fußplatte sorgen dabei für eine exakte Ausrichtung der Bohrschablone im Bereich von Ecken, z. B. zwischen Fußboden und Wand oder zwischen Wand und Decke, in denen vorzugsweise Leisten, insbesondere Fußleisten oder Eckleisten, anzubringen sind. Für den Fall, daß unterschiedlich dimensionierte Befestigungselemente für unterschiedlich große Leisten vorgehalten werden, ist es zweckmäßig, die Rückenplatte der Bohrschablone mit entsprechend vielen, passend angeordneten Bohrungen zu versehen, so daß eine Bohrschablone für die unterschiedlichen Befestigungselemente ausreichend ist.

Die Erfindung wird nachstehend anhand einer Zeichnung in mehreren Beispielen näher erläutert. Es zeigen:
Figur 1 ein Befestigungselement mit gegenüberliegenden Halteabschnitten,
Figur 2a ein Befestigungselement mit gegenüberliegenden Halteabschnitten für eine Befestigung an Wänden,
Figur 2b das Befestigungselement gemäß Figur 2a für eine Befestigung in einem Wandinneneck,
Figur 2c das Befestigungselement gemäß Figur 2a für eine Befestigung an einem Wandaußeneck,
Figur 3 einen Halteabschnitt des Befestigungselementes in schematischer Querschnitts-Darstellung,
Figur 4 eine Leiste mit Doppelnut, die mit dem Befestigungselement gemäß Figur 2a verbindbar ist,
Figur 5 einen Bausatz für ein Wand- oder Deckenpaneel mit einer verdeckten Befestigung mittels Befestigungselementen in einer weiteren Ausführung,
Figur 6 eine Bohrschablone für das Befestigungselement gemäß Figuren 2a bis 2c, in Ansicht, und
Figur 7 die Bohrschablone im Querschnitt gemäß der Linie VII - VII in Figur 6.

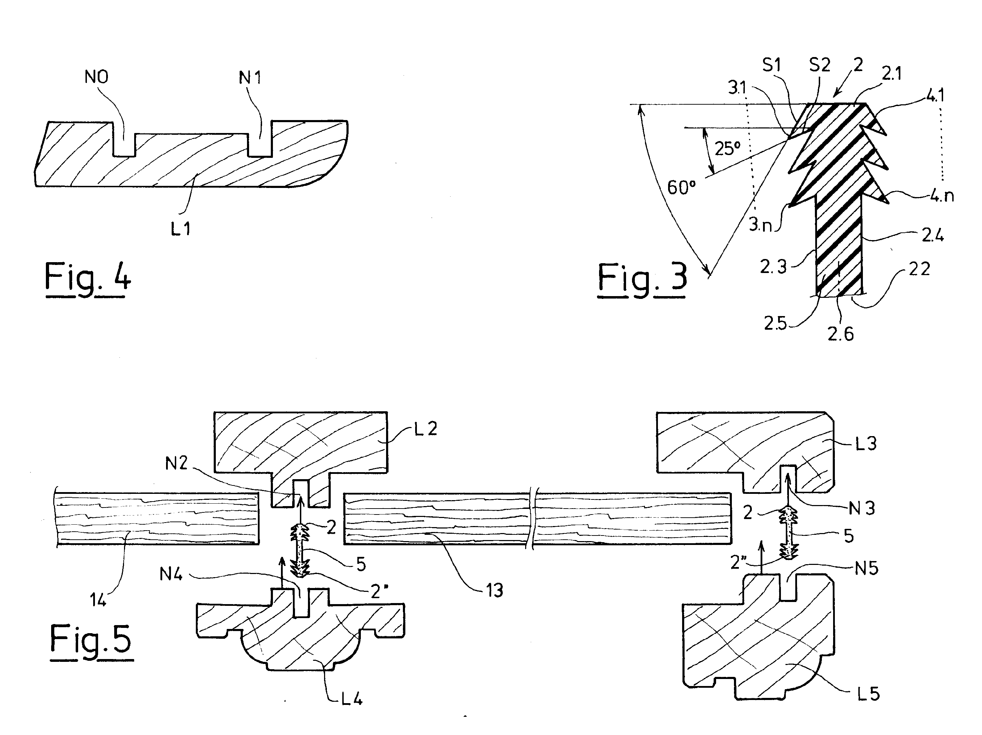

Wie Figur 3 zeigt, besteht ein Halteabschnitt 1 aus einem länglichen Körper, der in diesem Fall in seiner Grundform im Querschnitt quaderförmig ausgebildet ist. Er wird durch seine Seitenflächen 2.1, ... 2.6 begrenzt. An der Seitenfläche 2.3 sind hintereinander übergehend prismatische Halterungselemente 3.1, ... 3.n angeordnet. Wie am Halterungselement 3.1 dargestellt, neigt sich eine Schrägfläche S1 in einem Winkel von 60° zur Ebene der Seitenfläche 2.1 und eine zweite Schrägfläche S2 in einem Winkel von 25° zur Ebene der Seitenfläche 2.1. An der gegenüberliegenden Seitenfläche 2.4 sind ebensolche prismatische Halterungselemente 4.1, ... 4.n angeordnet. Hierdurch entsteht im Querschnitt ein tannenbaumartiges Gebilde, dessen Spitze oben durch die Seitenfläche 2.1 abgeflacht ist.

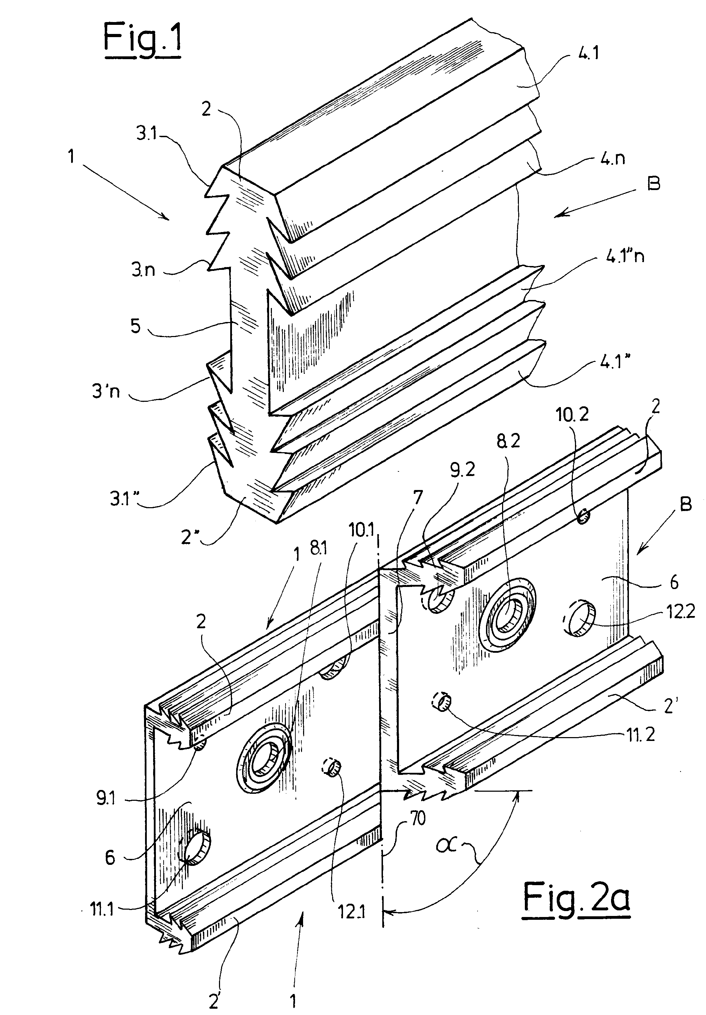

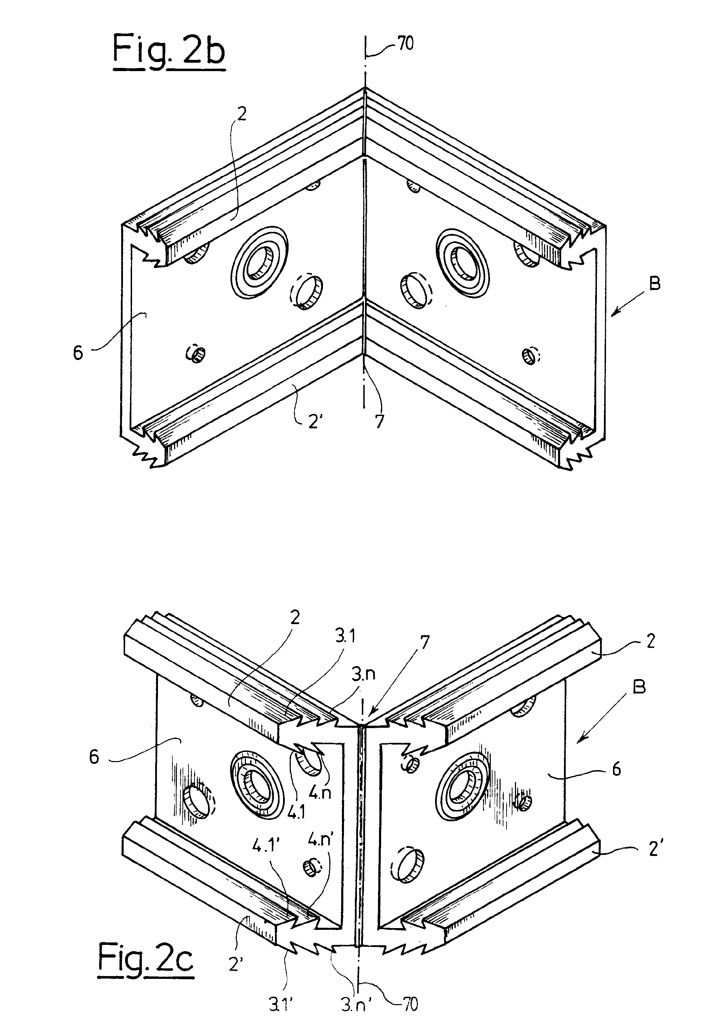

Ein solcher Halteabschnitt 1 ist, wie das in Figur 2a dargestellte Befestigungselement zeigt, an einer als Bodenplatte 6 ausgebildeten Basis B an deren einer Längskante in einem rechten Winkel angeordnet. Spiegelbildlich gegenüber befindet sich ein weiterer, gleicher Halteabschnitt 1 mit einem quaderförmigen Körper 2' mit prismatischen Halterungselementen. Die Bodenplatte 6 und die quaderförmigen Körper 2 und 2' haben einen im wesentlichen gleichen Querschnitt. Wesentlich ist bei dem Befestigungselement, daß etwa in der Mitte der Bodenplatte 6 eine nach vorne offene, von oben nach unten durchgehende, im Querschnitt gesehen dreieckförmige Ausnehmung 7 in die Bodenplatte 6 und die quaderförmigen Körper 2 und 2' eingebracht ist. Der Winkel a der Ausnehmung 7 beträgt etwa 90°. Er kann selbstverständlich auch größer oder kleiner gewählt werden. Mit diesem Befestigungselement ist es möglich, Leisten, wie sie in Figur4 dargestellt sind, an Wänden zu befestigen. Die Materialverdünnung an der Spitze der Ausnehmung 7 bildet eine Knicklinie 70, entlang welcher die beiden Hälften des Befestigungselementes scharnierartig in den gewünschten Winkel zueinanderverschwenkbar sind, z. B. zur Anpassung an Innen- oder Außenecken im Leistenverlauf.

In die Bodenplatte 6 sind zu beiden Seiten der Ausnehmung 7 Durchbrechungen 8.1, 8.2 und Bohrungen 9.1, 9.2, 10.1, 10.2, 11.1, 11.2, 12.1, 12.2 eingebracht. Die Bohrungen 9.1, 9.2, 10.1, 10.2, 11.1, 11.2, 12.1, 12.2 können mit der Fertigung des Befestigungselementes oder gegebenenfalls später realisiert werden. Sie können insbesondere auch zu einer vorläufigen Anheftung des Befestigungselementes dienen. Dadurch ist es möglich, das Befestigungselement zunächst exakt einzujustieren und danach an der Wand kraftschlüssig zu befestigen, vorzugsweise mit Dübeln und Schrauben.

Durch die Ausnehmung 7 ist es möglich, das Befestigungselement, wie es Figur 2b zeigt, in einem Inneneck in der gezeigten Art und Weise zu befestigen. Durch die beiden gegeneinander beweglichen Hälften des Befestigungselementes ist es möglich, bestimmte Winkelabweichungen im Inneneck leicht auszugleichen. Ebenso ist es möglich, das Befestigungselement, wie es Figur 2c zeigt, auf einem Außeneck zu befestigen. Auch hier können Winkelabweichungen in jedem Fall ausgeglichen werden. Da der Winkel a derAusnehmung 7 variierbar ist, ist eine Verlegung des Doppelsteg-Befestigungselementes nicht ausschließlich an ein rechtwinkliges Innen- bzw. Außeneck gebunden; auch andere Eckwinkel sind möglich.

Auf das befestigte Befestigungselement wird eine gemäß Figur4 ausgebildete Leiste L1 aufgesetzt. Deren Nuten NO und N1 drücken dabei auf die quaderförmigen Körper 2 und 2'. Die Seitenwände der Nuten schieben die prismatischen Halterungselemente 3.1, ... 3.n und 4.1, ... 4.n sowie 3.1', ... 3.n' und 4.1', ... 4.n' nach unten und innen. Da die Nut schmaler als der Außendurchmesser der prismatischen Halterungselemente ist, werden diese zugleich gestaucht. Vorteilhaft wirkt sich hier aus, daß den prismatischen Halterungselementen 3.1, ... 3.n, 4.1, ... 4.n, 3.1', ... 3.n', 4.1', ... 4.n' jeweils nach innen und außen genügend Freiraum für eine Deformierung und ein Verbiegen gelassen wird. Hierdurch entsteht eine ausreichende Haltekraft zwischen Befestigungselement und Leiste.

Ein weiterer Vorteil ist darüber hinaus, daß bei Verwendung des Materials Kunststoff für die Herstellung des Befestigungselementes eine leichte Biegsamkeit der Ausnehmung 7 vorhanden ist. Dadurch und durch das Einjustieren der Durchbrechungen 8.1, 8.2 ist eine optimale Anpassung des Befestigungselementes an unterschiedliche Wandausbildungen problemlos möglich.

In einem weiteren Ausführungsbeispiel gemäß Figur 1 ist dem quaderförmigen Körper 2 spiegelbildlich gegenüber ein weiterer quaderförmiger Körper 2" angeordnet. Zwischen beiden Körpern befindet sich ein quaderförmiger Steg 5. Alle drei Elemente, der quaderförmige Körper 2 und der quaderförmige Körper 2" sowie der quaderförmige Steg 5 sind von gleicher Stärke und bilden statisch und dynamisch eine Einheit. Am Körper 2 sind zu beiden Seiten die prismatischen Halterungselemente 3.1, ... 3.n, 4.1, ... 4.n und am gegenüberliegenden Körper 2" ebenfalls prismatische Halterungselemente 3.1",... 3.n", 4.1", ... 4.n" angeformt.

Mit diesem so ausgebildeten Befestigungselement können die Elemente eines Bausatzes für ein Wand-oder Deckenpaneel gemäß Figur 5 miteinander verbunden und befestigt werden. Der Bausatz besteht aus einer Vielzahl unterschiedlich geformter Leisten L2, L3, L4 und L5 sowie Profilhölzer 13 und 14. Die Leisten L2 und L3 werden an einer Wand befestigt. Hierzu kann, wie bereits beschrieben, das Befestigungselement gemäß Figur 2a Verwendung finden. An jeder der Leisten L2, L3 befindet sich eine Nut N2 bzw. N3. In die Nut N2 bzw. N3 wird das oben beschriebene Nut-Nut-Befestigungselement jeweils mit seinem quaderförmigen Körper 2 und den daran angeformten prismatischen Halterungselementen 3.1, ... 3.n, 4.1, ... 4.n gedrückt. Danach werden die Profilhölzer 13 und 14 an die Latten L2 und L3 gelegt. Die gegenüberliegenden Leisten L4 und L5 weisen ebenfalls Nuten N4 und N5 auf. In diese Nuten greift der gegenüberliegende quaderförmige Körper2" mit seinen prismatischen Halterungselementen 3.1", .. 3.n", 4.1 ", .. 4.n" ein. Nach einem jeweiligen festen Andrücken werden die Profilhölzer 13 und 14 fest zwischen den Leisten L2, L3, L4 und L5 gehalten. Durch dieses Nut-Nut-Befestigungselement tritt anstelle der Nut-Feder-Verbindung ein System, das aus Nut plus Nut mit speziellen Befestigungselementen besteht. Hierdurch ist es möglich, die Herstellung der Leisten und des gesamten Bausatzes wesentlich zu vereinfachen und zu rationalisieren. Geringe Toleranzen in der Nutbreite bzw. -tiefe werden durch das Nut-Nut-Befestigungselement gemäA Figur 1 problemlos ausgeglichen.

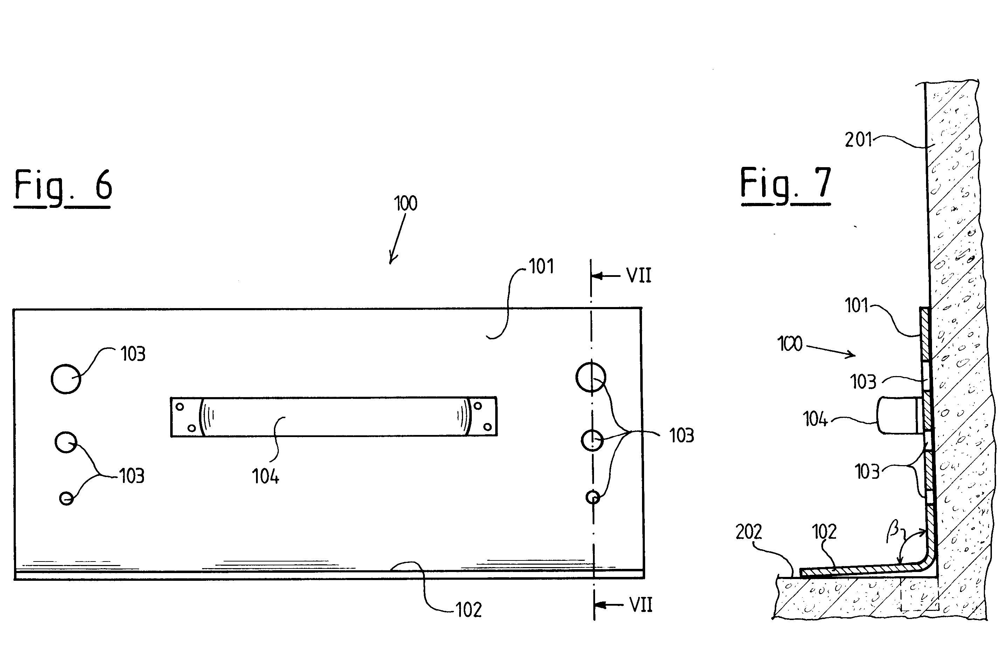

In den Figuren 6 und 7 ist eine Bohrschablone 100 gezeigt, die zur Erleichterung und Beschleunigung der Anbringung der Befestigungselemente gemäß Figur 2a bis 2c dient. Gemäß Figur 6, die die Bohrschablone 100 in Ansicht zeigt, besitzt letztere eine flache Rückenplatte 101 sowie eine flache Fußplatte 102, die von der Rückenplatte 101 nach vorne hin, d.h. zum Betrachter hin abgebogen ist. Durch die Rückenplatte 101 verlaufen mehrere, hier insgesamt sechs Bohrungen 103, die jeweils unterschiedliche Durchmesser aufweisen und in unterschiedlichen Höhenlagen vorgesehen sind. Diese Bohrungen 103 dienen zur Führung eines Bohrers, mittels welchem in einer hinter der Bohrschablone 100 liegenden Wand Bohrungen zur Aufnahme von Befestigungsmitteln für ein zuvor beschriebenes Befestigungselement herstellbar sind. Die Bohrschablone ermöglicht eine unmittelbare Herstellung der Bohrungen mit einer hohen Genauigkeit und mit geringem Arbeitsaufwand. Zur Erleichterung der Handhabung besitzt die Bohrschablone 100 auf der dem Benutzer zugewandten Seite der flachen Rückenplatte einen Haltegriff 104.

Aus der Schnittdarstellung in Figur 7 ist besonders deutlich ersichtlich, daß die Fußplatte 102 von der Rückenplatte 101 nach vorne hin abgebogen ist. Zwischen der Rückenplatte 101 und der Fußplatte 102 ist ein Winkel β eingeschlossen, der zwischen 90 und 95° liegt. Mit der Rückenplatte 101 ist die Bohrschablone 100 an die Oberfläche einer Wand 201 angelegt; die Fußplatte 102 liegt auf der Oberfläche eines Fußbodens 202 auf. Die Fußplatte 102 dient insbesondere dazu, im Eckbereich zwischen Fußboden 202 und Wand 201 eventuell vorhandene Spalten oder Fugen, wie dies in Figur 7 durch eine gestrichelte Linie angedeutet ist, zu überbrücken, ohne daß hinsichtlich der Genauigkeit der Positionierung der Bohrschablone Einbußen auftreten können.

## Patentansprüche

1. Befestigungselement zur verdeckten Halterung wenigstens einer auf ihrer Rückseite mit wenigstens einer Nut ( N0, ..., N5) versehenen Leiste (L1, ... L5), bestehend aus
- einer Basis (B) und
- wenigstens einem mit der Nut (N0, ..., N5) in Eingriff bringbaren Halteabschnitt (1),
dadurch gekennzeichnet, daß
der an der Basis (B) angeordnete Halteabschnitt (1) aus einem länglichen, in Ansicht oder im Längsschnitt gesehen im wesentlichen rechteck- oder parallelogramm- oder trapezförmigen Körper (2) besteht, an dessen gegenüberliegenden Seitenflächen (2.1, ... 2.6) wenigstens ein in Halteabschnittslängsrichtung laufendes, im wesentlichen prismatisches Halterungselement (3.1, ... 3.n; 4.1, ... 4.n) angeformt ist, dessen spitz zulaufende Prismenseitenflächen (S1; S2) in einem Winkel von 50 bis 70° bzw. 10 bis 35° zu den Seitenflächen (2.1, .... 2.6) geneigt sind.

2. Befestigungselement nach Anspruch 1, dadurch gekennzeichnet, daß die erste Prismenseitenfläche (S1) in einem Winkel von 60° und die zweite Prismenseitenflache (S2) in einem Winkel von 25° zu einer der Seitenflächen (2.1, ... 2.6) abgewinkelt angeordnet ist.

3. Befestigungselement nach Anspruch 1 oder 2, dadurch gekennzeichnet, daß die prismatischen Halterungselemente (3.1, ... 3.n; 4.1, ... 4.n) mit ihren Prismenseitenflächen (S1; S2) nebeneinander auf den gegenüberliegenden Seitenflächen (2.1, ... 2.6) des länglichen Körpers (2) schräg abgewinkelt angeordnet sind.

4. Befestigungselement nach wenigstens einem der Ansprüche 1 bis 3, dadurch gekennzeichnet, daß wenigstens ein länglicher Körper (2) mit prismatischen Halterungselementen (3.1, ... 3.n; 4.1, ... 4.n) rechtwinklig an einer als Bodenplatte (6) ausgebildeten Basis (B) angeordnet ist.

5. Befestigungselement nach wenigstens einem der Ansprüche 1 bis 4, dadurch gekennzeichnet, daß in den länglichen Körper (2) mit den prismatischen Halterungselementen (3.1, ... 3.n; 4.1, ... 4.n) und in die Bodenplatte (6) vorzugsweise in der Mitte eine im Querschnitt dreieckförmige, quer zur Längsrichtung des Befestigungselementes (1) laufende Ausnehmung (7) eingebracht ist.

6. Befestigungselement nach wenigstens einem der Ansprüche 1 bis 5 , dadurch gekennzeichnet, daß an der Bodenplatte (6) parallel zum ersten länglichen Körper (2) mit prismatischen Halterungselementen (3.1, ... 3.n; 4.1, ...4.n) ein zweiter länglicher Körper (2') mit prismatischen Halterungselementen (3.1', ... 3.n'; 4.1', ... 4.n') angeordnet ist.

7. Befestigungselement nach wenigstens einem der Ansprüche 1 bis 6, dadurch gekennzeichnet, daß die dreieckförmige Ausnehmung (7) oben offen und in einem Winkel (a) von 30 bis 120°, vorzugsweise 90°, ausgebildet ist.

8. Befestigungselement nach wenigstens einem der Ansprüche 1 bis 3, dadurch gekennzeichnet, daß der längliche Körper (2) mit den prismatischen Halterungselementen (3.1, ... 3.n; 4.1, ... 4.n) in eine als Steg (5) ausgebildete Basis (B) übergeht, an der entgegengesetzt zu dem ersten ein dritter länglicher Körper (2") mit prismatischen Halterungselementen (3.1",... 3.n"; 4.1", ... 4.n") angeordnet ist.

9. Befestigungselement nach wenigstens einem der Ansprüche 1 bis 8, dadurch gekennzeichnet, daß der zweite sowie der dritte längliche Körper (2'; 2") mit seinen prismatischen Halterungselementen (3.1', ... 3.n'; 4.1', ... 4.n'; 3.1", ... 3.n"; 4.1", ... 4.n") jeweils spiegelbildlich zum ersten länglichen Körper (2) mit prismatischen Halterungselementen (3.1, ... 3.n; 4.1, ...4.n) ausgebildet ist.

10. Befestigungselement nach wenigstens einem der Ansprüche 1 bis 9, dadurch gekennzeichnet,
- daß die Bodenplatte (6) mit den rechtwinklig und spiegelbildlich zueinander angeordneten ersten und zweiten Körpern (2; 2') mit ihren prismatischen Halterungselementen (3.1, ... 3.n; 4.1, ... 4.n; 3.1', ... 3.n'; 4.1', ... 4.n') und
- daß der erste und der dritte Körper (2; 2") mit ihren prismatischen Halterungselementen (3.1, ... 3.n; 4.1,... 4.n; 3.1", 3.n"; 4.1",... 4.n") mit dem dazwischenliegenden Steg (5)
einstückig hergestellt sind.

11. Befestigungselement nach wenigstens einem der Ansprüche 1 bis 10, dadurch gekennzeichnet, daß die Körper (2, 2', 2") mit ihren prismatischen Halterungselementen (3.1, ... 3.n; 4.1, ...4.n; 3.1', ... 3.n'; 4.1', ... 4.n'; 3.1", ... 3.n"; 4.1", 4.n"), der Steg (5) und die Bodenplatte (6) aus Kunststoff hergestellt sind.

12. Befestigungselement nach wenigstens einem der Ansprüche 1 bis 11, dadurch gekennzeichnet, daß der erste, zweite und dritte längliche Körper (2; 2'; 2") im Querschnitt gesehen quader-, prismen- oder vieleckförmig ausgebildet ist.

13. Befestigungselement nach wenigstens einem der Ansprüche 1 bis 12, dadurch gekennzeichnet, daß der Steg (5) als länglicher, quader-, oval- oder vieleckförmiger Körper ausgebildet ist.

14. Befestigungselement nach wenigstens einem der Ansprüche 1 bis 13, dadurch gekennzeichnet, daß der erste und der zweite längliche quaderförmig ausgebildete Körper (2, 2') und die Bodenplatte (6) im wesentlichen den gleichen Querschnitt haben.

15. Befestigungselement nach wenigstens einem der Ansprüche 1 bis 14, dadurch gekennzeichnet, daß der erste und dritte quaderförmig ausgebildete Körper (2, 2") und der quaderförmig ausgebildete Steg (5) im wesentlichen den gleichen Querschnitt haben.

16. Befestigungselement nach wenigstens einem der Ansprüche 1 bis 15, dadurch gekennzeichnet, daß in der Basis (B) wenigstens eine Durchbrechung (8.1, 8.2) oder Bohrung (9.1, 9.2, 10.1, 10.2, 11.1, 11.2, 12.1, 12.2) zur Hindurchführung von Befestigungsmitteln, wie Schrauben oder Nägel oder dergleichen, vorgesehen ist.

17. Bohrschablone für ein Befestigungselement nach Anspruch 16, gekennzeichnet durch
- eine flache Rückenplatte (101) mit mindestens einer Bohrung (103) in einer der Durchbrechung (8.1, 8.2) oder Bohrung (9.1, 9.2, 10.1, 10.2, 11.1, 11.2, 12.1, 12.2) im Befestigungselement entsprechenden Lage und in einer zur Hindurchführung eines Bohrers geeigneten Größe,
- eine flache Fußplatte (102), die unter einem Winkel β zwischen 90 und 95° von der Rückenplatte (101) abgewinkelt ist, und
- einen an der Rückenplatte (101) oder Bodenplatte (102) angebrachten Haltegriff (104).
